# EUROPÄISCHE PATENTSCHRIFT

(11) **EP 3 397 860 B1**
(45) Veröffentlichungstag und Bekanntmachung des Hinweises auf die Patenterteilung: **23.02.2022**
(21) Anmeldenummer: 16805472.4
(22) Anmeldetag: 05.12.2016
(51) Int. Cl.: F03D 80/40, F03D 17/00

(54) **VERFAHREN ZUM ERMITTELN EINES WERTS FÜR EINE EISANSATZMENGE AN MINDESTENS EINEM ROTORBLATT EINER WINDKRAFTANLAGE UND DESSEN VERWENDUNG**
METHOD FOR ASCERTAINING A VALUE OF AN ICE BUILDUP QUANTITY ON AT LEAST ONE ROTOR BLADE OF A WIND TURBINE, AND USE THEREOF
PROCÉDÉ PERMETTANT DE DÉTERMINER UNE VALEUR POUR UNE QUANTITÉ D'ACCUMULATION DE GIVRE SUR AU MOINS UNE PALE DE ROTOR D'UNE ÉOLIENNE ET SON UTILISATION

(30) Priorität: 29.12.2015 DE 102015122933
(43) Veröffentlichungstag der Anmeldung: 07.11.2018
(73) Patentinhaber: FOS4X GmbH, 81371 München (DE)
(72) Erfinder: MÜLLER, Mathias, 82194 Gröbenzell (DE); SCHAUSS, Thomas, 82205 Gliching (DE); RIEGER, Florian, 80331 München (DE)
(74) Vertreter: Kilchert, Jochen
(86) Internationale Anmeldenummer: PCT/EP2016/079759
(87) Internationale Veröffentlichungsnummer: WO 2017/114638

(56) Entgegenhaltungen:
- EP-A2- 1 466 827
- EP-A2- 2 588 752
- EP-B1- 2 588 752
- DE-A1-102013 223 294

## Beschreibung

### TECHNISCHES GEBIET

Ausführungsformen der vorliegenden Offenbarung betreffen ein Verfahren zum Ermitteln eines Werts für eine Eisansatzmenge an mindestens einem Rotorblatt einer Windkraftanlage sowie die Verwendung eines Verfahrens zum Ermitteln eines Werts für eine Eisansatzmenge an mindestens einem Rotorblatt einer Windkraftanlage.

Rotorblätter von Windkraftanlagen sind den Witterungsbedingungen der Umgebung ungeschützt ausgesetzt. An bestimmten Standorten kann bei entsprechend niedrigen Umgebungstemperaturen und ausreichend hoher Luftfeuchte bzw. bei auftretendem Niederschlag Eis an den Rotorblättern angelagert werden. Mit zunehmender Größe der Rotorblätter von Windkraftanlagen nimmt deren Oberfläche zu, so dass auch die Gefahr zur Anlagerung von Eis, d. h. der Ausbildung eines Eisansatzes an den Rotorblättern, zunimmt.

Eisanlagerungen stellen einerseits eine potentielle Gefahr für die Umgebung der Windkraftanlage dar, da bei einem Abwurf des Eisansatzes - im Betrieb oder im Stillstand der Anlage - die abgeworfenen Eisstücke Personen und Gegenstände im Abwurfradius gefährden können. Andererseits kann sich insbesondere bei ungleichmäßiger Anlagerung von Eis auch eine Unwucht des Rotors der Windkraftanlage ergeben, was im Betrieb der Windkraftanlage zu Schäden führen kann.

Die Kenntnis der Masse von angelagertem Eis an einem Rotorblatt kann für verschiedene Zwecke sinnvoll oder notwendig sein. Beispielsweise kann bei Kenntnis der Masse des Eisansatzes verifiziert werden, ob eine Rotorblatt-Abtaueinrichtung funktionsfähig ist bzw. ob eine Abtaustrategie zum Entfernen von Eis ausreichend ist. Außerdem kann es wünschenswert sein, bei einer Mehrzahl von Windkraftanlagen, die unter ähnlichen Umgebungsbedingungen betrieben werden, einen Mengenvergleich des jeweils auftretenden Eisansatzes durchzuführen und ggf. entsprechende Optimierungsmaßnahmen an den Windkraftanlagen vorzunehmen.

### STAND DER TECHNIK

Es ist bekannt, Daten einer Windkraftanlage auszuwerten, um auf die Gefahr einer bereits stattgefundenen Anlagerung von Eis zu schließen. Die DE 10 2005 016 524 A1 offenbart ein Verfahren zum Erkennen von Eis an einer Windturbine, bei welchem sowohl meteorologische Bedingungen überwacht werde, die im Zusammenhang mit Vereisungszuständen stehen, und auch eine oder mehrere physikalische, charakteristische Größen der Windkraftanlage im Betrieb überwacht werden, die auf eine Massenveränderung der Rotorblätter der Windkraftanlage schließen lassen.

EP 2 588 752 B1 offenbart ein System zur Rotorblatt-Eisdetektion für eine Windkraftanlage, das einen oder mehrere Sensoren zum Detektieren von Vibrationen des Rotorblattes umfasst. Ein Sensorsignal wird mit einer Referenz verglichen, oder Sensordaten werden einem mathematischen Modell zugeführt, um Änderungen des Verhaltens des Rotorblattes zu bestimmen.

DE 10 2013 223 294 A1 offenbart ein Verfahren zur Erkennung einer Massenveränderung oder einer Steifigkeitsveränderung einer Komponente einer Windkraftanlage. Ein Referenzwert für eine Eigenfrequenz der Komponente wird bei einer ordnungsgemäß funktionierenden Windkraftanlage bestimmt.

Die bekannten Verfahren weisen z. B. den Nachteil auf, dass ein bereits vorhandener Eisansatz nur qualitativ erkannt werden kann; eine Mengenangabe des Eisansatzes ist bei den herkömmlichen Verfahren nicht vorgesehen.

Es soll daher eine Lösung angegeben werden, welche eine zuverlässige Bestimmung eines Werts für eine Eisansatzmenge an mindestens einem Rotorblatt der Windkraftanlage erlaubt.

### ZUSAMMENFASSUNG

Ausführungsformen der vorliegenden Offenbarung stellen ein Verfahren zum Ermitteln eines Werts für eine Eisansatzmenge an mindestens einem Rotorblatt einer Windkraftanlage gemäß Anspruch 1 bereit. Ferner geben Ausführungsformen der vorliegenden Offenbarung eine Verwendung eines hierin beschriebenen Verfahrens zum Ermitteln der für einen Abtauvorgang benötigten Betriebsparameter einer Rotorblatt-Abtaueinrichtung gemäß Anspruch 9 an. Außerdem geben Ausführungsformen der vorliegenden Offenbarung eine Verwendung eines hierin beschriebenen Verfahrens für eine Mehrzahl von Windkraftanlagen eines Windparks gemäß Anspruch 10 an.

Gemäß einer Ausführungsform wird ein Verfahren ein Verfahren zum Ermitteln eines Werts für eine Eisansatzmenge an mindestens einem Rotorblatt einer Windkraftanlage angegeben, mit Ermitteln eines Grundwerts für mindestens eine Eigenfrequenz des Rotorblatts bei Schwingungsanregung im eisansatzfreien Zustand; Ermitteln eines Verschiebungs-Grundfaktors für eine Verschiebung der mindestens einen Eigenfrequenz gegenüber dem eisansatzfreien Zustand bei einer um einen bestimmten Wert erhöhten Eisansatzmenge; Erfassen eines Messwerts oder Messwertverlaufs einer zur Bestimmung der aktuellen Eigenfrequenzen des Rotorblatts geeigneten Messgröße, und Bestimmen der aktuellen Eigenfrequenzen des Rotorblatts; Herleiten eines aktuellen Verschiebungsfaktors durch Vergleichen der aktuellen Eigenfrequenzen mit dem Grundwert, Vergleichen des aktuellen Verschiebungsfaktors mit dem Verschiebungs-Grundfaktor, und Herleiten eines Werts für die Eisansatzmenge anhand des Vergleichs.

Gemäß einer weiteren Ausführungsform wird eine Verwendung eines Verfahrens zum Ermitteln eines Werts für eine Eisansatzmenge an mindestens einem Rotorblatt einer Windkraftanlage für ein Ermitteln der für einen Abtauvorgang benötigten Betriebsparameter einer Rotorblatt-Abtaueinrichtung angegeben, wobei das Verfahren umfasst: Ermitteln eines Grundwerts für mindestens eine Eigenfrequenz des Rotorblatts bei Schwingungsanregung im eisansatzfreien Zustand; Ermitteln eines Verschiebungs-Grundfaktors für eine Verschiebung der mindestens einen Eigenfrequenz gegenüber dem eisansatzfreien Zustand bei einer um einen bestimmten Wert erhöhten Eisansatzmenge; Erfassen eines Messwerts oder Messwertverlaufs einer zur Bestimmung der aktuellen Eigenfrequenzen des Rotorblatts geeigneten Messgröße, und Bestimmen der aktuellen Eigenfrequenzen des Rotorblatts; Herleiten eines aktuellen Verschiebungsfaktors durch Vergleichen der aktuellen Eigenfrequenzen mit dem Grundwert, Vergleichen des aktuellen Verschiebungsfaktors mit dem Verschiebungs-Grundfaktor, und Herleiten eines Werts für die Eisansatzmenge anhand des Vergleichs.

Gemäß einer weiteren Ausführungsform wird eine Verwendung eines Verfahrens zum Ermitteln eines Werts für eine Eisansatzmenge an mindestens einem Rotorblatt einer Windkraftanlage für eine Mehrzahl von Windkraftanlagen eines Windparks angegeben, wobei das Verfahren umfasst: Ermitteln eines Grundwerts für mindestens eine Eigenfrequenz des Rotorblatts bei Schwingungsanregung im eisansatzfreien Zustand; Ermitteln eines Verschiebungs-Grundfaktors für eine Verschiebung der mindestens einen Eigenfrequenz gegenüber dem eisansatzfreien Zustand bei einer um einen bestimmten Wert erhöhten Eisansatzmenge; Erfassen eines Messwerts oder Messwertverlaufs einer zur Bestimmung der aktuellen Eigenfrequenzen des Rotorblatts geeigneten Messgröße, und Bestimmen der aktuellen Eigenfrequenzen des Rotorblatts; Herleiten eines aktuellen Verschiebungsfaktors durch Vergleichen der aktuellen Eigenfrequenzen mit dem Grundwert, Vergleichen des aktuellen Verschiebungsfaktors mit dem Verschiebungs-Grundfaktor, und Herleiten eines Werts für die Eisansatzmenge anhand des Vergleichs; Ermitteln des jeweiligen Werts für die Eisansatzmenge an jeder Windkraftanlage der Mehrzahl von Windkraftanlagen; Vergleichen der Werte; und Ermitteln eines Gefährdungsindikators für Eisansatz für mindestens eine Windkraftanlage der Mehrzahl von Windkraftanlagen aus dem Vergleich.

### KURZE BESCHREIBUNG DER ZEICHNUNGEN

Ausführungsformen der Erfindung sind in den Zeichnungen dargestellt und in der nachfolgenden Beschreibung näher erläutert. In den Zeichnungen zeigen:
- Fig. 1: ein Diagramm der logarithmierten Amplitude von Rotorblattschwingungen über der Frequenz zum Erläutern eines Verfahrens zum Ermitteln eines Werts für eine Eisansatzmenge an mindestens einem Rotorblatt einer Windkraftanlage gemäß einer Ausführungsform der Erfindung;
- Fig. 2: eine schematische Darstellung einer Windkraftanlage, bei welcher das Verfahren gemäß einer der hierin beschriebenen Ausführungsformen zum Einsatz kommen kann; und
- Fig. 3: ein Ablaufdiagramm eines Verfahrens zum Prognostizieren der Anlagerung von Eis an einem Rotorblatt einer Windkraftanlage gemäß einer Ausführungsform der Erfindung.

Nachstehend werden Ausführungsformen der Erfindung näher erläutert. Die Zeichnungen dienen der Veranschaulichung eines oder mehrerer Beispiele von Ausführungsformen der Erfindung.

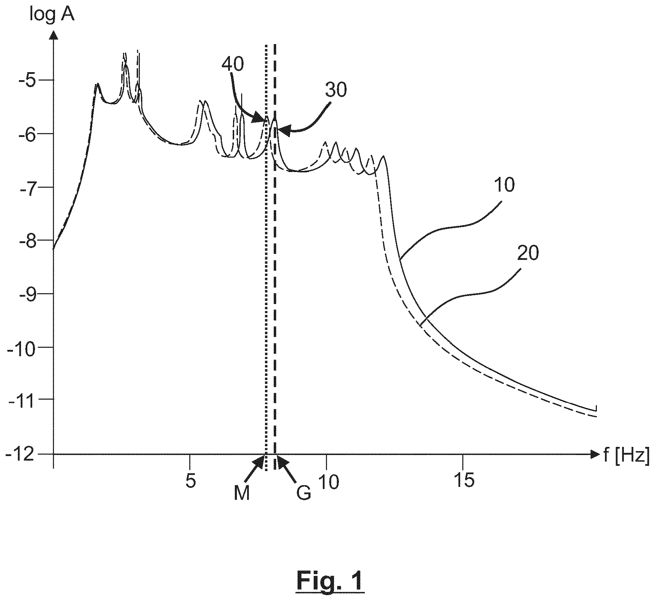

In Fig. 1 ist ein Diagramm dargestellt, das den Verlauf der logarithmierten Amplitude von Rotorblattschwingungen in Abhängigkeit von der Frequenz zeigt. Eine erste Kurve 10 zeigt den Amplitudenverlauf für eine Schwingungsanregung eines Rotorblatts im eisansatzfreien Zustand; eine zweite Kurve 20 zeigt den Amplitudenverlauf für eine Schwingungsanregung bei einer um 100 kg erhöhten Rotorblattmasse.

Im Diagramm sind die Eigenfrequenzen der jeweiligen Schwingungsanregungen als Frequenzüberhöhungen (Peaks) sichtbar. In der Ausführungsform wird einer der Peaks, der einer Eigenfrequenz zuordenbar ist, für das beschriebene Verfahren verwendet; es ist jedoch auch denkbar, mehrere der Eigenfrequenzen zu verwenden.

Bei der Ausführungsform wird ein Grundwert G für die Eigenfrequenz bestimmt, typischerweise wie auch im vorliegenden Beispiel im Maximum (im Scheitelpunkt) des zugehörigen Peaks 30 der ersten Kurve 10, und zwar durch ein Erfassen des Messwertverlaufs einer Vibrationsmessung und anschließender geeigneter Transformation in den Frequenzbereich, beispielsweise durch eine Fouriertransformation oder eine andere geeignete Integraltransformation. Bei anderen Ausführungsformen kann aber auch der Grundwert durch eine Simulation der Eigenfrequenz des Rotorblatts im eisansatzfreien Zustand ermittelt werden.

Bei der Ausführungsform wird ebenfalls ein Verschiebungs-Grundfaktor für eine Verschiebung der mindestens einen Eigenfrequenz bestimmt, der bei einer um einen bestimmten Wert erhöhten Eisansatzmenge auftritt. In dem in Fig. 1 dargestellten Diagramm verschiebt sich der Scheitelpunkt des zu der betrachteten Eigenfrequenz gehörenden Peaks 40 der zweiten Kurve 20 um einen bestimmten Wert hin zu einer niedrigeren Frequenz, nämlich auf den Wert M. Durch Inbezugsetzen des Peaks 40 zu dem Peak 30 kann der Verschiebungs-Grundfaktor der betrachteten Eigenfrequenz ermittelt werden. In der vorliegenden Ausführungsform wird dieser Verschiebungs-Grundfaktor der Erhöhung der Rotorblattmasse um 100 kg zugeordnet.

In der Ausführungsform wird wiederum zum Ermitteln des Kurvenverlaufs der Kurve 20 der Verlauf einer Vibrationsmessung an einem schwingungsangeregten Rotorblatt mit um 100 kg erhöhter Masse, der definierten Testmasse, messtechnisch erfasst und einer geeigneten Transformation in den Frequenzbereich, beispielsweise einer Fouriertransformation oder einer anderen geeigneten Integraltransformation unterzogen. Hieraus kann dann der Verschiebungs-Grundfaktor ermittelt werden. Bei anderen Ausführungsformen kann aber auch der Verschiebungs-Grundfaktor durch eine Simulation der Eigenfrequenz des Rotorblatts im um die definierte Testmasse erhöhten Zustand ermittelt werden.

Mit dem ermitteltem Grundwert und dem ermitteltem Verschiebungs-Grundfaktor wird bei der Ausführungsform ein Messwerts oder Messwertverlauf einer zur Bestimmung der aktuellen Eigenfrequenzen des Rotorblatts geeigneten Messgröße ermittelt. Bei Ausführungsformen ist die Messgröße ein Vibrationsverlauf in oder an dem Rotorblatt, und die aktuellen Eigenfrequenzen werden aus einem Frequenzgang des Vibrationsverlaufes hergeleitet.

Gemäß der beschriebenen Ausführungsform werden die aktuellen Eigenfrequenzen des Rotorblatts bestimmt. Durch Vergleichen der aktuellen Eigenfrequenzen mit dem Grundwert wird ein aktueller Verschiebungsfaktor hergeleitet. Der aktuelle Verschiebungsfaktor wird mit dem Verschiebungs-Grundfaktor verglichen, und anhand des Vergleichs wird ein Wert für die Eisansatzmenge hergeleitet.

Typischerweise werden hierfür wiederum die Vibrationen in oder an dem Rotorblatt gemessen, und der Vibrationsverlauf wird einer geeigneten Integraltransformation unterzogen. Anschließend wird bzw. werden der Peak der zugehörigen Eigenfrequenz und/oder die Peaks der zugehörigen Eigenfrequenzen, für welche der Verschiebungs-Grundfaktor bestimmt wurde, mit der ursprünglichen Eigenfrequenz bzw. den ursprünglichen Eigenfrequenzen in Bezug gesetzt, so dass ein aktueller Verschiebungsfaktor des betreffenden Peaks zu dem Peak des Grundwerts erhalten wird. Aus diesem aktuellen Verschiebungsfaktor kann durch Vergleich mit dem Verschiebungs-Grundfaktor ein Wert für die Eisansatzmenge hergeleitet werden.

Die hierin beschriebenen Verfahren haben z. B. einen dahingehenden Vorteil, dass nicht nur qualitativ ein Eisansatz erkannt werden kann, sondern auch die Menge eines Eisansatzes quantitativ bestimmt werden kann. Die Bestimmungsgenauigkeit ist bei den hierin beschriebenen Verfahren typischerweise besser als 50 kg, oft besser als 20 kg. Die Bestimmungsgenauigkeit kann bei den hierin beschriebenen Verfahren im Bereich von 10 kg oder besser liegen.

Der hergeleitete Wert für die Eisansatzmenge kann beispielsweise ausgegeben werden. Er kann alternativ oder zusätzlich z. B. auch für automatisierte Aufgaben verwendet werden, beispielsweise die Steuerung oder Regelung der Windkraftanlage oder von deren Anlagenteilen.

Bei Ausführungsformen beträgt der bestimmte Wert der erhöhten Eisansatzmenge 50 kg oder weniger, vorzugsweise 20 kg oder weniger, besonders vorzugsweise ungefähr 10 kg. Dies kann insbesondere bei messtechnischem Ermitteln des Verschiebungs-Grundfaktors zu einem einfachen Messaufbau beitragen.

Bei Ausführungsformen wird die Messgröße an einer Mehrzahl von Messpunkten oder in einer Mehrzahl von Messbereichen an oder in dem Rotorblatt erfasst. Die Mehrzahl von Messpunkten bzw. die Mehrzahl von Messbereichen kann geeignet gewählt sein, um einen möglichst großen Bereich des Rotorblatts abzudecken. Es ist jedoch auch denkbar, die Messgröße an einer kleineren Anzahl von Messpunkten bzw. Messbereichen oder auch nur in einem einzigen Messpunkt oder Messbereich zu erfassen, beispielsweise in Bereichen oder in einem Bereich, die bzw. der empirisch oder durch Simulation besonders geeignet für die Eigenfrequenzbestimmung ist bzw. sind.

Bei Ausführungsformen umfasst das Verfahren ferner ein Festlegen eines Schwellenwertes, der die maximal mögliche Eisansatzmenge an dem Rotorblatt angibt; ein Bestimmen, ob oder ob nicht der hergeleitete Wert für die Eisansatzmenge den Schwellenwert überschreitet; und wenn festgestellt wird, dass der Schwellenwert überschritten ist: Bestimmen, dass ein fehlerhafter Wert für den Wert des Eisansatzes ermittelt wurde.

Ein solcher fehlerhafter Wert kann sich beispielsweise dann ergeben, wenn zusätzliche oder alternative Einflüsse in den Wert eingegangen sind. Solche Einflüsse können z. B. in der Beschädigung des Rotorblatts liegen, bei Blitzschlag auftreten oder dergleichen. Es kann bei geeigneter Wahl des Schwellenwerts eine Plausibilitätsprüfung des Wertes für den Eisansatz vorgenommen werden.

Bei Ausführungsformen wird jeweils ein Wert für die Eisansatzmenge an mindestens zwei Rotorblättern der Windkraftanlage ermittelt. Das Verfahren umfasst dann ferner ein Vergleichen der Werte für die jeweilige Eisansatzmenge; und ein Ermitteln, ob oder ob nicht die Unwucht des Rotors der Windkraftanlage einen vorab festgelegten oder festlegbaren Wert überschreitet, aus dem Vergleich.

Das Vergleichen kann z. B. eine Differenzbildung der Werte für die jeweilige Eisansatzmenge umfassen. Aus dem Vergleich kann auf eine Unwucht geschlossen werden, z. B. wenn die Differenz einen bestimmten zulässigen Unwucht-Schwellenwert überschreitet.

Eine Unwucht stellt eine besondere Gefahr für die Anlage dar; durch die verfahrensgemäße Bestimmung, ob eine solche Unwucht vorliegt oder nicht, kann ein fehlerhafter Betrieb der Anlage vermieden werden.

Bei Ausführungsformen bezieht sich die Eisansatzmenge auf eine Eismasse und/oder auf ein Eisvolumen und/oder auf eine Eisschichtdicke. Vorzugsweise bezieht sich die Eisansatzmenge auf eine Eismasse und/oder auf ein Eisvolumen im Bereich der Rotorblattspitze und/oder auf eine Eisschichtdicke im Bereich der Rotorblattspitze. Es kann die hergeleitete Eismasse z. B. in Kilogramm ausgegeben werden, und/oder es kann das hergeleitete Eisvolumen ausgegeben werden, und/oder es kann die hergeleitete Dicke einer Eisschicht angegeben werden.

Bei Ausführungsformen wird das hierin beschriebene Verfahren zum Ermitteln der für einen Abtauvorgang benötigten Betriebsparameter einer Rotorblatt-Abtaueinrichtung verwendet. Beispielsweise kann der Zeitpunkt der Inbetriebnahme einer solchen Rotorblatt-Abtaueinrichtung anhand des hergeleiteten Werts für die Eisansatzmenge für ein zufriedenstellendes Abtauergebnis bei niedrigem Energieaufwand bestimmt werden, z. B. wenn festgestellt wird, dass ein Maximalwert für eine zulässige Eismasse überschritten ist. Beispielsweise kann auch der Zeitpunkt der Außerbetriebnahme einer solchen Rotorblatt-Abtaueinrichtung bestimmt werden, z. B. wenn festgestellt wird, dass ein Minimalwert für eine zulässige Eismasse unterschritten ist.

Bei Ausführungsformen wird das hierin beschriebene Verfahren an einer Mehrzahl von Windkraftanlagen eines Windparks verwendet, und es umfasst ferner ein Ermitteln des jeweiligen Werts für die Eisansatzmenge an jeder Windkraftanlage der Mehrzahl von Windkraftanlagen; Vergleichen der Werte; Ermitteln eines Gefährdungsindikators für Eisansatz für mindestens eine Windkraftanlage der Mehrzahl von Windkraftanlagen aus dem Vergleich.

Es können beispielsweise für Eisansatz besonders gefährdete Anlagen innerhalb eines Windparks identifiziert werden, indem die Eisansatzmengen der einzelnen Anlagen verglichen werden. Insbesondere, wenn die Anlagen innerhalb des Windparks den im Wesentlichen gleichen Bedingungen ausgesetzt sind, können so z. B. für Eisansatz gefährdete Anlagen gezielten Gegenmaßnahmen unterzogen werden, z. B. durch frühzeitiges Zuschalten einer Rotorblatt-Abtaueinrichtung gezielt bei diesen betreffenden Anlagen. Dies kann zu einem energieeffizienten Betrieb beitragen.

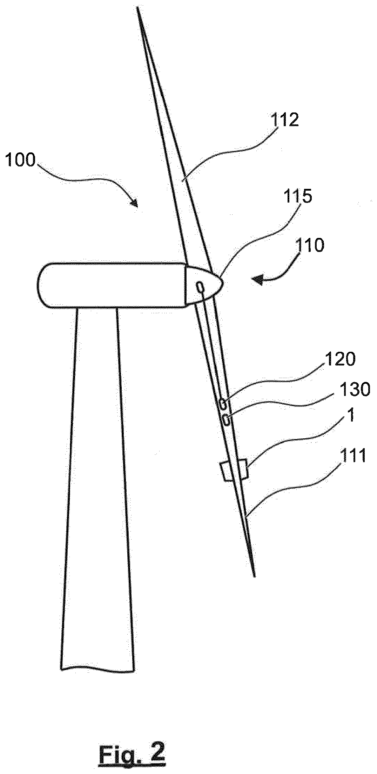

Fig. 2 zeigt beispielhaft eine Windkraftanlage 100, an welcher das hierin beschrieben Verfahren zum Einsatz kommen kann. Die Windkraftanlage umfasst einen Rotor 115, an dessen Rotornabe 110 drei Rotorblätter angebracht sind, von welchen in der Seitenansicht von Fig. 2 ein erstes Rotorblatt 111 und ein zweites Rotorblatt 112 gezeigt sind. Zur besseren Darstellung sind die nachfolgend beschriebenen Betriebsmittel nur an dem ersten Rotorblatt 111 dargestellt; sie können jedoch auch an weiteren oder an allen Rotorblättern vorhanden sein.

Im Bereich der Rotorblattspitze ist ein Eisansatz 1 schematisch dargestellt. Die Vibrationen im Rotorblatt werden mittels eines Rotorblattsensors 120 erfasst, der gemäß der Ausführungsform als Vibrationssensor ausgestaltet ist. Ferner ist eine Rotorblatt-Abtaueinrichtung 130 vorgesehen. Die Rotorblatt-Abtaueinrichtung 130 kann sich über weite Teile des jeweiligen Rotorblatts 111, 112 oder im Wesentlichen über dessen gesamte Ausdehnung erstrecken.

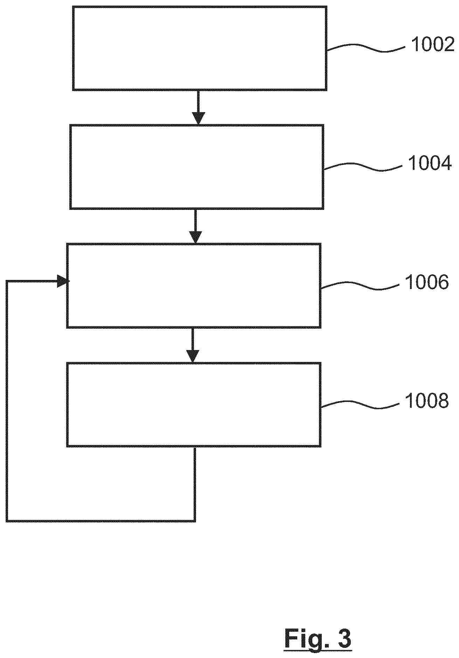

Fig. 3 zeigt ein Ablaufdiagramm eines Verfahrens zum Ermitteln eines Werts für eine Eisansatzmenge an mindestens einem Rotorblatt 111, 112 der Windkraftanlage 100.

In einem Schritt 1002 wird ein Grundwert G für mindestens eine Eigenfrequenz des Rotorblatts 111, 112 bei Schwingungsanregung im eisansatzfreien Zustand ermittelt.

In einem nachfolgendenden Schritt 1004 des Verfahrens wird ein Verschiebungs-Grundfaktor für eine Verschiebung der mindestens einen Eigenfrequenz gegenüber dem eisansatzfreien Zustand bei einer um einen bestimmten Wert erhöhten Eisansatzmenge ermittelt.

In einem nachfolgendenden Schritt 1006 des Verfahrens wird ein Messwert oder Messwertverlauf einer zur Bestimmung der aktuellen Eigenfrequenzen des Rotorblatts 111, 112 geeigneten Messgröße erfasst, und es werden die aktuellen Eigenfrequenzen des Rotorblatts 111, 112 direkt oder indirekt aus dem Messwert bzw. aus dem Messwertverlauf bestimmt.

In einem nachfolgendenden Schritt 1008 des Verfahrens wird ein aktueller Verschiebungsfaktor durch Vergleichen der aktuellen Eigenfrequenzen mit dem Grundwert G hergeleitet, es werden der aktuelle Verschiebungsfaktors mit dem Verschiebungs-Grundfaktor verglichen, und es wird ein Wert für die Eisansatzmenge anhand des Vergleichs hergeleitet.

Nach dem Schritt 1008 erfolgt ein Rücksprung zu Schritt 1006.

Es sei an dieser Stelle darauf hingewiesen, dass die hierin beschriebenen Aspekte und Ausführungsformen angemessen miteinander kombinierbar sind, und dass einzelne Aspekte dort weggelassen werden können, wo es im Rahmen des fachmännischen Handelns sinnvoll und möglich ist. Abwandlungen und Ergänzungen der hierin beschriebenen Aspekte sind dem Fachmann geläufig.

## Patentansprüche

1. Verfahren zum Ermitteln eines Werts für eine Eisansatzmenge an mindestens einem Rotorblatt (111, 112) einer Windkraftanlage (100), umfassend:
Ermitteln eines Grundwerts (G) für mindestens eine Eigenfrequenz des Rotorblatts (111, 112) bei Schwingungsanregung im eisansatzfreien Zustand;
Ermitteln eines Verschiebungs-Grundfaktors für eine Verschiebung der mindestens einen Eigenfrequenz gegenüber dem eisansatzfreien Zustand bei einer um einen bestimmten Wert erhöhten Eisansatzmenge;
Erfassen eines Messwerts oder Messwertverlaufs einer zur Bestimmung der aktuellen Eigenfrequenzen des Rotorblatts (111, 112) geeigneten Messgröße, und Bestimmen der aktuellen Eigenfrequenzen des Rotorblatts (111, 112);
Herleiten eines aktuellen Verschiebungsfaktors durch Vergleichen der aktuellen Eigenfrequenzen mit dem Grundwert (G), Vergleichen des aktuellen Verschiebungsfaktors mit dem Verschiebungs-Grundfaktor, und Herleiten eines Werts für die Eisansatzmenge anhand des Vergleichs; **dadurch gekennzeichnet, dass** das Verfahren weiter die folgenden Schritte umfasst:
Festlegen eines Schwellenwertes, der die maximal mögliche Eisansatzmenge an dem Rotorblatt (111, 112) angibt;
Bestimmen, ob oder ob nicht der hergeleitete Wert für die Eisansatzmenge den Schwellenwert überschreitet;
wenn festgestellt wird, dass der Schwellenwert überschritten ist:
Bestimmen, dass ein fehlerhafter Wert für den Wert des Eisansatzes ermittelt wurde.

2. Verfahren nach Anspruch 1,
wobei das Ermitteln des Grundwerts (G) eine Erfassen des Messwerts oder Messwertverlaufs der Messgröße im eisansatzfreien Zustand umfasst; und/oder wobei das Ermitteln des Grundwerts (G) eine Simulation der Eigenfrequenz des Rotorblattes (111, 112) im eisansatzfreien Zustand umfasst.

3. Verfahren nach einem der vorhergehenden Ansprüche,
wobei der bestimmte Wert der erhöhten Eisansatzmenge 50 kg oder weniger, vorzugsweise 20 kg oder weniger, besonders vorzugsweise ungefähr 10 kg beträgt.

4. Verfahren nach einem der vorhergehenden Ansprüche,
wobei die Messgröße ein Vibrationsverlauf in oder an dem Rotorblatt (111, 112) ist, und wobei die aktuellen Eigenfrequenzen aus einem Frequenzgang des Vibrationsverlaufes hergeleitet werden.

5. Verfahren nach einem der vorhergehenden Ansprüche,
wobei die Messgröße an einer Mehrzahl von Messpunkten oder in einer Mehrzahl von Messbereichen an oder in dem Rotorblatt (111, 112) erfasst wird.

6. Verfahren nach einem der vorhergehenden Ansprüche,
wobei jeweils ein Wert für die Eisansatzmenge an mindestens zwei Rotorblättern (111, 112) der Windkraftanlage (100) ermittelt wird, ferner umfassend:
Vergleichen der Werte für die jeweilige Eisansatzmenge;
Ermitteln, ob oder ob nicht die Unwucht des Rotors (115) der Windkraftanlage (100) einen vorab festgelegten oder festlegbaren Wert überschreitet, aus dem Vergleich.

7. Verfahren nach einem der vorhergehenden Ansprüche,
wobei sich die Eisansatzmenge auf eine Eismasse und/oder auf ein Eisvolumen und/oder auf eine Eisschichtdicke bezieht;
wobei sich die Eisansatzmenge vorzugsweise auf eine Eismasse und/oder auf ein Eisvolumen im Bereich der Rotorblattspitze und/oder auf eine Eisschichtdicke im Bereich der Rotorblattspitze bezieht.

8. Verwendung des Verfahrens nach einem der vorhergehenden Ansprüche zum Ermitteln der für einen Abtauvorgang benötigten Betriebsparameter einer Rotorblatt-Abtaueinrichtung (130).

9. Verwendung des Verfahrens nach einem der Ansprüche 1-7 für eine Mehrzahl von Windkraftanlagen (100) eines Windparks, umfassend:
Ermitteln des jeweiligen Werts für die Eisansatzmenge an jeder Windkraftanlage (100) der Mehrzahl von Windkraftanlagen (100);
Vergleichen der Werte;
Ermitteln eines Gefährdungsindikators für Eisansatz für mindestens eine Windkraftanlage (100) der Mehrzahl von Windkraftanlagen (100) aus dem Vergleich.

## Claims

1. Method for ascertaining a value of an ice buildup quantity on at least one rotor blade (111, 112) of a wind turbine (100), comprising:
determining a base value (G) for at least one resonant frequency of the rotor blade (111, 112) during vibration stimulation in an ice buildup free state;
determining a base displacement factor for a displacement of the at least one resonant frequency compared to the ice buildup free state when the amount of ice buildup quantity has increased by a certain value;
detecting a measured value or a sequence ofmeasured values of a measured variable suitable for determining the current resonant frequencies of the rotor blade (111, 112), and determining the current resonant frequencies of the rotor blade (111, 112);
deriving a current displacement factor by comparing the current resonant frequencies with the base value (G), comparing the current displacement factor with the base displacement factor, and deriving a value of the ice buildup quantity based on the comparison;
**characterized in that** the method further comprises the following steps:
specifying a threshold indicating the maximum possible ice buildup quantityon the rotor blade (111, 112);
determining whether or not the derived value of the ice buildup quantityexceeds the threshold;
if it is determined that the threshold has been exceeded: determining that an erroneous value has been determined for the value of the ice buildup.

2. Method according to claim 1,
wherein determining the base value (G) comprises detecting the measured value or a sequence of measured values of the measured variable in the ice buildup free state; and/or wherein determining the base value (G) comprises a simulation of the resonant frequency of the rotor blade (111, 112) in the ice buildup free state.

3. Method according to any one of the preceding claims,
wherein the specific value of the increased ice buildup quantity is 50 kg or less,
preferably 20 kg or less, particularly preferably approximately 10 kg.

4. Method according to any one of the preceding claims,
wherein the measured variable is a vibration curve in or on the rotor blade (111, 112), and wherein the current resonant frequencies are derived from a frequency response of the vibration curve.

5. Method according to any one of the preceding claims,
wherein the measured variable is detected at a plurality of measuring points or in a plurality of measuring regions on or in the rotor blade (111, 112).

6. Method according to any one of the preceding claims, wherein a value of the ice buildup quantity on at least two rotor blades (111, 112) of the wind turbine (100) is determined each, further comprising:
comparing the values of the respective ice buildup quantity;
determining, from the comparison, whether or not the imbalance of the rotor (115) of the wind turbine (100) exceeds a predefined or definable value.

7. Method according to any one of the preceding claims,
wherein the ice buildup quantity refers to an ice mass and/or to an ice volume and/or to an ice layer thickness;
wherein the ice buildup quantity preferably refers to an ice mass and/or to an ice volume in the region of the rotor blade tip and/or to an ice layer thickness in the region of the rotor blade tip.

8. Use of the method according to any one of the preceding claims for determining the operating parameters of a rotor blade defrosting device (130) required for a defrosting process.

9. Use of the method according to any one of claims 1-7 for a plurality of wind turbines (100) of a wind farm, comprising:
determining the respective values of the ice buildup quantity at each wind turbine (100) of the plurality of wind turbines (100);
comparing the values;
determining, from the comparison, a hazard indicator for ice buildup for at least one wind turbine (100) of the plurality of wind turbines (100).

## Revendications

1. Procédé permettant de déterminer une valeur pour une quantité d'accumulation de givre sur au moins une pale de rotor (111, 112) d'une éolienne (100), comprenant :
la détermination d'une valeur de base (G) pour au moins une fréquence naturelle de la pale de rotor (111, 112) pendant excitation vibratoire à l'état sans accumulation de givre ;
la détermination d'un facteur de déplacement de base pour une déplacement de l' au moins une fréquence naturelle par rapport à l'état sans accumulation de givre lorsque la quantité d'accumulation de givre est augmentée d'une certaine valeur ;
l'acquisition d'une valeur de mesure ou d'un profil de valeur de mesure d'une valeur appropriée pour déterminer les fréquences naturelles actuelles de la grandeur de mesure appropriée à la pale de rotor (111, 112), et la détermination des fréquences naturelles actuelles de la pale de rotor (111, 112) ;
la déduite d'un facteur de déplacement actuel en comparant les fréquences naturelles actuelles avec la valeur de base (G), la comparaison du facteur de déplacement actuel avec le facteur de déplacement de base, et la déduite d'une valeur de la quantité d'accumulation de givre sur la base de la comparaison ;
**caractérisé en ce que** le procédé comprend en outre les étapes suivantes :
la fixation d'une valeur seuil qui spécifie la quantité d'accumulation de givre maximale possible sur la pale du rotor (111, 112) ;
la détermination, si ou non la valeur déduite pour la quantité d'accumulation de givre dépasse la valeur seuil ;
s'il est déterminé que la valeur seuil a été dépassée : la détermination qu'une valeur incorrecte a été déterminée pour la valeur de l'accumulation de givre.

2. Procédé selon la revendication 1,
dans lequel la détermination de la valeur de base (G) comprend un enregistrement de la valeur de mesure ou du profil de valeur de mesure de la grandeur de mesure à l'état sans accumulation de givre ; et/ou dans lequel la détermination de la valeur de base (G) comprend une simulation de la fréquence naturelle de la pale de rotor (111, 112) à l'état sans accumulation de givre.

3. Procédé selon une quelconque des revendications précédentes,
dans lequel la valeur déterminée de la quantité accrue d'accumulation de givre est de 50 kg ou moins, de préférence de 20 kg ou moins, de manière particulièrement préférée d'environ 10 kg.

4. Procédé selon une quelconque des revendications précédentes,
dans lequel la grandeur de mesure est une courbe de vibration dans ou sur l'aube de rotor (111, 112), et dans lequel les fréquences naturelles actuelles sont déduites d'une réponse de fréquence de la courbe de vibration.

5. Procédé selon une quelconque des revendications précédentes,
dans lequel la grandeur de mesure est détectée en plusieurs points de mesure ou en plusieurs zones de mesure sur ou dans la pale de rotor (111, 112).

6. Procédé selon une quelconque des revendications précédentes,
dans lequel respectivement une valeur pour la quantité d'accumulation de givre sur au moins deux pales de rotor (111, 112) de l'éolienne (100) est déterminée, comprenant en outre :
la comparaison des valeurs pour la quantité respective d'accumulation de givre ;
la détermination si ou non le déséquilibre du rotor (115) de l'éolienne (100) dépasse ou non une valeur prédéterminée ou déterminable d'après la comparaison.

7. Procédé selon une quelconque des revendications précédentes,
dans lequel la quantité d'accumulation de givre se rapporte à une masse de givre et/ou à un volume de givre et/ou à une épaisseur de couche de givre ;
dans lequel la quantité d'accumulation de givre se rapporte de préférence à une masse de givre et/ou un volume de givre dans la zone de la pointe de pale de rotor et/ou une épaisseur de couche de givre dans la zone de la pointe de pale de rotor.

8. Utilisation du procédé selon une des revendications précédentes pour déterminer les paramètres de fonctionnement d'un dispositif de dégivrage d'aubes de rotor (130) nécessaires à un processus de dégivrage.

9. Utilisation du procédé selon une quelconque des revendications 1 à 7 pour une pluralité d'éoliennes (100) d'un parc éolien, comprenant :
la détermination de la valeur respective de la quantité d'accumulation de givre sur chaque éolienne (100) de la pluralité d'éoliennes (100) ;
la comparaison des valeurs ;
la détermination d'un indicateur de risque d'accumulation de givre pour au moins une éolienne (100) de la pluralité d'éoliennes (100) d'après la comparaison.
